# EUROPÄISCHE PATENTSCHRIFT

(11) **EP 4 202 374 B1**
(45) Veröffentlichungstag und Bekanntmachung des Hinweises auf die Patenterteilung: **06.05.2026**
(21) Anmeldenummer: 21217004.7
(22) Anmeldetag: 22.12.2021
(51) Int. Cl.: G01D 5/353

(54) **VORRICHTUNG ZUM FASER-OPTISCHEN MESSEN UND TRANSPORTIEREN VON MESSSIGNALEN**
DEVICE FOR FIBRE-OPTICAL MEASUREMENT AND TRANSPORT OF MEASUREMENT SIGNALS
DISPOSITIF DE MESURE PAR FIBRE OPTIQUE ET DE TRANSPORT DES SIGNAUX DE MESURE

(43) Veröffentlichungstag der Anmeldung: 28.06.2023
(73) Patentinhaber: Universität Hamburg, 20148 Hamburg (DE)
(72) Erfinder: Schnabel, Roman, 30161 Hannover (DE)
(74) Vertreter: Hauck Patent- und Rechtsanwälte PartmbB

(56) Entgegenhaltungen:
- EP-A1- 3 680 638
- WO-A1-2015/170355
- WO-A2-2011/153018
- US-A1- 2016 025 524

## Beschreibung

Die vorliegende Erfindung betrifft eine Vorrichtung zum faser-optischen Messen und Transportieren von Messsignalen.

Bei der vorliegenden messtechnischen Aufgabe wird eine dezentrale Messtechnik (*distributed sensing*) eingesetzt, die räumlich verteilt misst und die verteilt gewonnenen Messergebnisse in einer Messstation zusammenführt. Durch die räumliche Verteilung des Messvorgangs besteht die Möglichkeit, dass nicht-autorisierte Personen sich Zugriff zu den Messdaten verschaffen, diese auslesen oder sogar relevante Messergebnisse aus dem Datenstrom löschen. Ein Beispiel sind Überwachungssysteme für Gelände, die vor unerlaubten Aktivitäten auf dem Gelände, beispielsweise einem Betriebsgelände oder einem Bahngelände, warnen. Der Eingriff bzw. das Abhören von solchen Überwachungssystemen beinhaltet verschiedene Aspekte: Einerseits können die Messergebnisse, die aus der Überwachung stammen, verfälscht werden, um so ein nicht autorisiertes Betreten des überwachten Geländes zu verbergen. Andererseits können die Messergebnisse auch ausgelesen werden, um festzustellen ob sich Personen, wie beispielsweise Wachpersonal, auf dem überwachten Gelände befinden.

Ein sehr erfolgreiches Beispiel dezentraler Messtechnik nutz Telekommunikationsglasfasern und gepulstes oder amplitudenmoduliertes Laserlicht, das durch die Glasfaser geschickt wird und bestimmte zeitliche Intensitätsabfolgen und Frequenzanteile hat. Gemessen werden die kleinen Leistungsanteile, die von statistisch verteilten Störstellen im Glas der Faser gegen die eigentliche Strahlrichtung zurückgestreut werden. Dehnt sich die Faser in einem Bereich zwischen zwei Störstellen, so kommt es zu einer Vergrößerung des zeitlichen Abstands zweier rückgestreuter Pulse. Wird die Faser hingegen im selben Bereich gestaucht, so kommt es zu einer Abstandsverkürzung der beiden rückgestreuten Pulse. Die Faser soll einen guten Reibungskontakt zum umgebenen Erdreich haben. In diesem Fall zeigen Dehnungen und Stauchungen der Faser akustische Schwingungen der Umgebung an. Ein solches System wird als DAS-System (Distributed Acoustic Sensing System) bezeichnet. Nachteilig an dem bekannten System ist, dass im Prinzip die Glasfaser angezapft werden kann und über eine optische Diode das rückgestreute Licht abgezweigt und dadurch beliebig gedämpft werden kann. In diesem Fall würde das Messsignal einer nicht-autorisierten Person zufallen.

Aus GB 2,442,745 ist eine faser-optische DAS Messeinrichtung bekannt. Vorgesehen ist sie beispielsweise für einen Einbruchalarm. Vorgesehen ist es, Gruppen von Lichtpulsen unterschiedlicher Frequenz durch konventionelle Glasfasern zu schicken und die Interferenz von Lichtanteilen zu beobachten, die an unterschiedlichen Stellen entlang der Faser rückgestreut wurden. Nachteilig ist, dass die Messsignale von einer nicht-autorisierten Person abgegriffen werden können, ohne dass dieses bemerkt wird. Auch können vorhandene Signale gelöscht werden, ohne dass dieses bemerkt wird.

Aus WO 2010/020795 ist eine faser-optische DAS Messeinrichtung bekannt. Vorgesehen ist die bekannte dezentrale DAS-Messtechnik beispielsweise für die Überwachung von Öl- und Gaspipelines. Zur Vermessung vorgesehen sind P- und S-Wellen in festen Medien, z.B. im Erdreich. Löst eine Quelle sowohl P-Wellen (Primär- bzw. Druckwellen) und S-Wellen (Sekundär- bzw. Scherwellen) aus, so laufen diese unterschiedlich schnell im Medium. Durch beide Typen von Wellen wird das feste Medium mit der Frequenz der Störung gedehnt und gestaucht. Die optische Faser, die im Kontakt zum festen Medium ist, dehnt bzw. staucht sich mit. Durch die unterschiedliche Ausbreitungsgeschwindigkeit von P-Wellen und S-Wellen können diese unterschieden werden. Nachteilig ist auch hier, dass die Messsignale von einer nicht-autorisierten Person abgegriffen werden können, ohne dass dieses bemerkt wird. Auch können vorhandene Signale gelöscht werden, ohne dass dieses bemerkt wird.

Aus WO 2017/093741 A1 ist ein DAS-System zur Überwachung eines Eisenbahnnetzes bekannt. Als messenden Wellenleiter werden herkömmliche Lichtleiter aus dem Bereich der Telekommunikation eingesetzt. Die Fasern werden einfach entlang einem Transportnetzwerk, wie beispielsweise einer Eisenbahntrasse oder Straße, in einem engen Kanal verlegt. Die optische Faser ist in einem Schutzgehäuse angeordnet, so dass keine Wartung erforderlich ist. Ausgehend von einer Messstation werden optische Pulse mit einem bestimmten Frequenzmuster in die messende Faser geleitet. Die Rückstreuung dieser Pulse wird ausgewertet, wobei auf die Rayleigh-Rückstreuung abgestellt wird. Eine Ortsauflösung für die akustische Störung erfolgt mithilfe von den optischen Pulsfolgen aufmodulierter Frequenzen. Nachteilig ist auch hier, dass die Messsignale von einer nicht-autorisierten Person abgegriffen werden können, ohne dass dieses bemerkt wird. Auch können vorhandene Signale gelöscht werden, ohne dass dieses bemerkt wird.

Aus US 2016/0025524 A1 ist die Auswertung von Brillouin-Streuung von optischen Pulsen in Fasern bekannt.

Aus WO 2011/153018 ist ein Verfahren bekannt geworden, um in einem interferometrischen Messsystem mit mehr als einem Wellenleiter ein Übersprechen zwischen den Wellenleitern zu verringern.

Aus EP 3 680 638 A1 ist ein Verfahren bekannt geworden, um den Fasersensor (die Quelle der Rayleigh-Rückstreuung) auf seine Integrität (korrekte Funktionsweise) überprüfen zu können.

Aus WO 2015/170355 A1 ist ein Verfahren bekannt geworden, um durch die Auswertung von Rayleigh-Rückstreuung und stimulierter Brillouin-Streuung bei hoher Ortsauflösung und geringen Kosten sowohl Informationen über Faserdehnung als auch Fasertemperaturänderungen zu erhalten.

Der vorliegenden Erfindung liegt die Aufgabe zugrunde, das Auslesen der Daten eines dezentralen Messsystems für eine autorisierte Person gegenüber anderen abzusichern.

Erfindungsgemäß wird die Aufgabe durch eine Vorrichtung mit den Merkmalen aus Anspruch 1 gelöst. Vorteilhafte Ausgestaltung bilden den Gegenstand der Unteransprüche.

Die erfindungsgemäße Vorrichtung ist vorgesehen und bestimmt zum faser-optischen Messen und Transportieren von Messsignalen. Die Vorrichtung weist eine Messstation auf, die mindestens einen in einem Wellenleiter geführten Messstrahl und einen Referenz-Lichtstrahl aufweist. Dies bedeutet, es ist ein Wellenleiter für den Messstrahl und ein Wellenleiter für den Referenz-Lichtstrahl vorgesehen. Der Referenz-Lichtstrahl verläuft innerhalb der Messstation und ist als solcher vor einem externen, nicht autorisierten Zugriff gesichert. Beide Lichtstrahlen sind an eine

Interferometereinheit mit mindestens einem, bevorzugt mit zwei Fotodetektoren angeschlossen. Erfindungsgemäß ist vorgesehen, dass der wellenleitergeführte Messstrahl zurück in die Messstation geführt ist. Die Erfindung beruht auf der Einsicht, für die Messung das gesamte durch Fasern transmittierte Licht zu verwenden und nicht lediglich einen kleinen rückgestreuten Anteil des Lichts. Dadurch ist das Signal bei derselben Lichtleistung in der Faser potenziell deutlich höher. Insbesondere ist die Messung akustischer Signale bei einem DAS-System nicht mehr abhängig von der Größe und Häufigkeit der Störstellen in der Faser, die als Streuzentren genutzt werden. Indem die das Licht führende Faser in die Messstation zurückgeführt wird, kann das transmittierte Licht in der Messstation ausgewertet werden.

In einer Alternative der Erfindung liegt eine Faserschleife vor, durch die der Messstrahl in die Messstation zurückgeführt ist. Der Wellenleiter mit dem Licht ist als ein Ring oder eine Schleife ausgebildet, bei dem/der beide Enden in der Messstation angeordnet sind und der Messstrahl aus der Messstation kommend den Wellenleiter durchläuft und wieder in die Messstation eintritt. Technisch bevorzugt wird ein unabhängiger Lichtstrahl in Gegenrichtung durch dieselbe Faser bzw. durch dieselben Messpunkte parallel verlegte Faser geschickt und auch dieses Licht vermessen. Durch die zeitliche Verschiebung derselben Signale auf den beiden Messstrahlen kann auf den Ort der Messung geschlossen werden. Neben der Verwendung einer zweiten Faser kann auch Licht unterschiedlicher Wellenlänge, unterschiedlicher Polarisation oder mit Unterschieden in anderen Größen wie Modulationen etc. in einer gemeinsamen Faser für die Ortsauflösung gegensinnig geleitet werden. Sind die gegenläufigen Strahlen unterscheidbar, so kann ungewolltes Streulicht von einer Laufrichtung in die andere einfach diskriminiert werden.

In einer alternativen Form der Erfindung, die auch zusätzlich zu der Faserschleife eingesetzt werden kann, läuft das Licht durch einen Faserstrang und wird an dessen Ende möglichst vollständig reflektiert, sodass es dieselbe Faser in entgegengesetzter Richtung durchläuft. Der Faserstrang besitzt bevorzugt einen Wellenleiter, der den Messstrahl führt, wobei der Wellenleiter mit einem Ende der Messstation entspringt und an seinem freien Ende einen Reflektor aufweist. Der Reflektor ist Bestandteil einer lokalen Messeinheit, die optisch ausgelesen wird. In einer kompakteren Ausführung ist die reflektierende Messeinheit direkt an das Faserende kontaktiert, so dass der Lichtstrahl nicht erst aus der Faser austreten muss.

Ein Vorteil der Ausführung dieses Faserstrangs besteht darin, dass kein unabhängiger Lichtstrahl notwendig ist, um eine Ortsauflösung einer akustischen Störung vorzunehmen.

Erfindungsgemäß ist ein Dauerstrich-Laserlicht in dem Messstrahl und den Referenzstrahl aufgeteilt. Das Dauerstrich-Laserlicht hat eine geringe mittlere Leistung, so dass zu erwartende Messsignal gerade noch aus dem Photonenschrotrauschen (Quantenrauschen) herausragen. Dabei ist das Laserlicht in Leistung, Phase und/oder Frequenz zufällig oder quasi zufällig moduliert. Durch die zufällige, sich nicht wiederholende Modulation kann die Laufzeit einer Hälfte des Lichtes im Bezug zur anderen Hälfte eindeutig gemessen werden. Die eine Hälfte dient als Messstrahl, der das dezentrale Messsignal aufsammelt und in die Messstation transportiert. Die andere Hälfte des Lichts verbleibt in der Messstation und dient als Referenzstrahl, der nicht von Messsignalen beeinflusst ist. Bevorzugt wird für das Dauerstrich-Laserlicht gequetschtes Licht verwendet. Durch die Aufteilung des gequetschten Laserlichts in zwei Strahlen entsteht eine quantenmechanische Verschränkung im Hinblick auf die Amplitude (bzw. Intensität) und Phase (bzw. Frequenz), der beiden Strahlen. Ein Abhörversuch oder ein Löschen der Messdaten führt damit unwiederbringlich zu einer Abnahme der Verschränkung. Diese wird beim Vergleich von zurückgelaufenem Messstrahl und Referenzstrahl zusätzlich zum Signal gemessen und quantifiziert und so der Abhörversuch aufgedeckt. Hört die nicht-autorisierte Person nur einen kleinen Teil des Lichts ab, so ist der Abhörversuch für die autorisierte Person schwerer zu entdecken, aber die nicht-autorisierte Person bekommt ein entsprechend schlechteres Signal-zu-Quantenrausch-Verhältnis. Überschreitet die Menge der abgegriffenen Signale einen selbst gesetzten Schwellwert, kann bevorzugt das Auslesen der dezentralen Messung unterbrochen werden. Damit wird sichergestellt, dass eine autorisierte Person immer ein deutlich besseres Signal-zu-Rausch-Verhältnis besitzt als das einem Lauscher vorliegende Signal. Eine weitere Absicherung der Messdaten kann durch eine schnelle In-situ-Anpassung der Lichtleistung erfolgen, indem auf Basis gerader gewonnenen Messdaten sichergestellt wird, dass Signalamplituden niemals viel größer sind als die Rauschleistungen der verschränkten Zustände.

In einer weiteren bevorzugten Ausgestaltung wird ein zufälliges Störsignal dem gemessenen und dem Referenzlaserstrahl derart aufgeprägt, dass das Störsignal in der Interferometereinheit mit dem Referenzlaserstrahl herausgenommen wird.

In einer bevorzugten Ausgestaltung bedeckt das Störsignal mindestens die Hälfte, bevorzugt mehr als 80 % eines Signalfrequenzbandes. Der Zufallsgenerator zur Erzeugung des zufälligen Störsignals kann bevorzugt ein Quantenzufallsgenerator sein.

In einer bevorzugten Ausgestaltung haben die in der Interferometereinheit überlagerten Mess- und Referenzstrahlen Strahlen durch das gequetschte Licht mit einander verschränkte Quantenunschärfen, wobei der Quetschfaktor bzgl. des Quantenrauschen des Messsignals mindestens 2 ist (entspricht 3dB).

In einer bevorzugten Weiterbildung ist die Interferometereinheit dazu ausgebildet, mit einem ersten Detektor eine störungsfreie Signalamplitude und mit einem zweiten Detektor eine störungsfreie Signalphase auszulesen.

Die Interferometereinheit wird mit einem Lokaloszillator zum Auswerten der überlagerten Messstrahlen und Referenzstrahlen gespeist.

In einer weiteren bevorzugten Ausgestaltung sind in dem Wellenleiter des Messtrahls ein oder mehrere Sensoren vorgesehen, die einen Messwert auf dem Messstrahl aufmodulieren. Das Aufmodulieren der Messwerte kann sowohl für die Ausführung mit einer Faserschleife als auch in der Ausgestaltung mit einem Faserstrang erfolgen. Die aufmodulierten Messwerte können beispielsweise von Sensoren zur Erfassung einer lokalen Temperatur oder einer lokalen Luftfeuchte stammt.

Alle Ausführungen messen das gesamte Licht, das durch eine Faser transmittiert wurde, und nicht lediglich einen kleinen rückgestreuten Anteil des Lichts. Dadurch ist das Signal bei derselben Lichtleistung in der Faser potentiell deutlich höher. Insbesondere ist die Messung akustischer Signale bei einem DAS-System nicht mehr abhängig von der Größe und Häufigkeit der Störstellen in der Faser, die als Streuzentren genutzt werden.

In einer Ausführungsform läuft das Licht aus einer Messstation durch eine Faserschleife zurück zur Station. In der Regel ist es hier sinnvoll, einen unabhängigen Lichtstrahl in Gegenrichtung durch dieselbe Faser bzw. durch eine durch dieselben Messpunkte parallel verlegte Faser zu schicken und auch dieses Licht zu vermessen. Durch die zeitliche Verschiebung derselben Signale auf den beiden Messstrahlen kann so auf den Ort der Messung geschlossen werden, ähnlich wie es beim bekannten DAS System aufgrund der rückgestreuten Signale auch möglich ist.

In einer anderen Ausführungsform läuft das Licht durch einen Faserstrang und wird am Ende möglichst vollständig durch dieselbe Faser zurückgeschickt. Diese Ausführungsform ist besonders geeignet in Kombination mit einem zusätzlichen entfernten speziellen Druck-, Temperatur- oder Feuchtigkeitssensor, der nur für reflektiertes Licht funktioniert. In dieser Ausführung ist kein unabhängiger Lichtstrahl notwendig, um eine Bestimmung des Ortes einer akustischen Störung zu bestimmen.

Alle Ausführungen nutzen Dauerstrich-Laserlicht, das in seiner Leistung und/oder Amplitude und/oder Phase und/oder Frequenz zufällig oder quasi-zufällig moduliert ist. Durch die zufällige, sich nicht wiederholende Modulation kann die Laufzeit einer Hälfte des Lichts im Bezug zur anderen Hälfte eindeutig gemessen werden. Eine Hälfte dient als Messstrahl, der das dezentrale Messsignal aufsammelt und in die Messstation transportiert. Die andere Hälfte des Lichts verbleibt in der zentralen Messstation, dient als Referenzstrahl und sammelt kein Messsignal auf.

In einer besonders relevanten Ausführung wird gequetschtes Licht verwendet. Durch die Überlagerung und Aufteilung von zwei Strahlen mit gequetschtem Licht entstehen zwei Strahlen, die quantenmechanisch verschränkt sind bzgl. der Amplituden (bzw. Intensitäten) und Phasen (bzw. Frequenzen) der beiden Strahlen. Ähnlich wie in der Quantenkryptographie führt ein Abhörversuch der Messdaten unwiederbringlich zu einer Abnahme der Verschränkung. Diese wird beim Vergleich von zurückgelaufenen Messstrahl und Referenzstrahl zusätzlich zum Signal gemessen und quantifiziert. Hört die nicht-autorisierte Person nur einen kleinen Teil des Lichts ab, so ist das ihr verfügbare Signal-zu-Rausch-Verhältnis deutlich schlechter, weil Ihr nicht der verschränkte Strahl zur Verfügung steht. Überschreitet die Menge des abgegriffenen Signals einen selbstgesetzten Schwellwert würde die Messung unterbrochen werden. Damit wird gesichert, dass die autorisierte Person immer einen deutlich besseres Signal-zu-Rausch-Verhältnis hat als andere Personen. Eine weitere Absicherung der Messdaten kann durch eine Anpassung der Lichtleistung passieren, indem sichergestellt wird, dass Signalamplituden niemals viel größer sind als die Rauschleistung des verschränkten Zustandes.

In einer weiteren Ausführungsform wird das Licht mittels einer Faserschleife durch spezielle Sensoren gestrahlt, die an bestimmten Orten platziert worden sind. Denkbar sind Sensoren, die eine lokale Größe messen, wie z.B. Temperatur oder Luftfeuchtigkeit und diese bei einer bestimmten Frequenz auf transmittiertes Licht kodieren. Weiterhin denkbar ist auch das Auslesen und Übertragen eines Kamerabildes.

In einer ähnlichen Ausführungsform wird das Licht mittels Faserstrang zu einem speziellen Sensor geführt und von diesem in die Faser zurückreflektiert. Denkbar sind Sensoren, die eine lokale Größe messen, wie z.B. Temperatur, Luftfeuchtigkeit oder ein Kamerabild und diese bei einer bestimmten Frequenz durch Reflexion auf das Licht kodieren.

Eine bevorzugte Ausgestaltung der Erfindung wird anhand von zwei Ausführungsbeispielen näher erläutert:
- Figur 1: Eine Messstation mit einem ringförmig geschlossenen Wellenleiter und
- Figur 2: eine Messstation mit einem Wellenleiter, der ein freies Ende hoher Reflektivität aufweist.

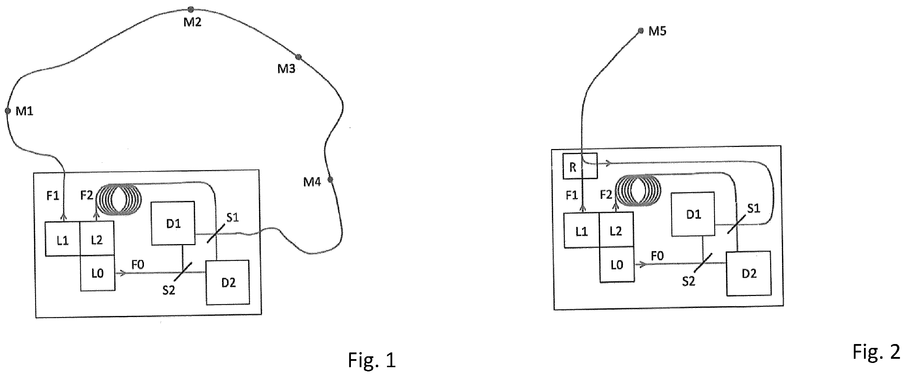

Figur 1 zeigt eine Messstation 10, aus der ein Lichtstrahl L1 innerhalb einer Faser F1 austritt, über die verteilten Messpunkte M1 bis M4 läuft und wieder in die Messstation 10 eintritt. Die optische Faser F1 ist ringförmig geschlossen und besitzt kein reflektierendes Ende. Eine zweite lichtführende optische Faser F2 verbleibt innerhalb der Messstation 10. Die Lichtstrahlen in F1 und F2 stammen vom selben Laser und weisen korreliertes und antikorreliertes quasi-zufälliges Rauschen auf. F1 führt in Figur 1 den Messstrahl, der über die gesamte Strecke akustische Signale aufnimmt und im Bereich der Messpunkte M1 bis M4 weitere Signale von speziellen Sensoren aufnimmt. Durch akustische Signale über die gesamte Strecke des Wellenleiters F1 kommt es zu Dehnungen und Stauchungen der das Licht führenden Fasern, was zu einer Phasenmodulation des messenden Laserstrahls führt. Der messende Laserstrahl wird zusammen mit einem in dem Referenzwellenleiter F2 geführten Referenzlaserstrahl auf einen Strahlteiler S1 in einer Interferometereinheit geleitet. Die Ausgangsstrahlen des Strahlteilers S1 treffen jeweils auf einen photo-elektrischen Detektor D1 und D2. Ebenfalls wird ein Lichtstrahl über einen Wellenleiter F0 auf einen zweiten Strahlteiler S2 geleitet, der den geteilten Lichtstrahl ebenfalls auf die Detektoren D1 und D2 legt. Die Lichtstrahlen L0, L1 und L2 entstammen derselben Laserquelle oder auch mehreren Laserquellen, die auf einander stabilisiert und geregelt sind.

Ein wichtiger Aspekt an der vorstehenden Messvorrichtung ist, dass das Laserlicht L1, ausgehend von einer autorisierten sicheren Messstation 10 für dezentrale Messungen verteilt wird und der überwiegende Anteil von mehr als 50 %, bevorzugt mehr als 90 % nach der erfolgten dezentralen Messung zurück zum Sender gelangt. Es wird also nicht länger mit der Messung von rückgestreutem Laserlicht, z.B. Rayleigh-Rückstreuung gearbeitet.

Ein weiterer wichtiger Aspekt der dargestellten Vorrichtung besteht darin, dem Laserlicht L1 vor seinem Aussenden noch in der vertrauenswürdigen Messstation über einen großen Teil des Signalfrequenzbandes Störsignale aufzuprägen. Die Störsignale sind zufällig und somit nicht berechenbar. Bevorzugt sind sie so gewählt, dass sie die zu erwartenden Messsignale mit einer möglichst hohen Amplitude überstrahlen, so dass anhand des Lichtsignals L1 nach der Aufnahme der Messdaten nur sehr wenig über die Messdaten erfahrbar ist. Mit dem Aufprägen des Störsignals kann ein korreliertes Laserlicht L2 erzeugt werden, das es ermöglicht, die aufgeprägte Störung im Laserlicht L1 zu subtrahieren und so die Ergebnisse der dezentralen Messung zu lesen. Die echte Zufälligkeit der Störsignale kann beispielsweise durch einen Quantenzufallszahlengenerator erzeugt werden.

Werden die beiden Laserstrahlen L1 und L2 am Strahlteiler S1 überlagert, so wird dieser so eingestellt, dass in einem Strahlteilerausgang alle absichtlich aufgeprägten zufälligen Amplituden-Störsignale destruktiv interferieren und im zweiten Strahlteilerausgang alle absichtlich aufgeprägten zufälligen Phasen-Störsignale destruktiv interferieren. Das Licht zu dem Amplitudensignal wird auf Photo-Detektor D1 gelenkt, während das Licht der Phasen-Störsignale auf den Photo-Detektor D2 gelenkt wird. Das Licht L0 im optischen Weg F0 dient als Lokaloszillatorfeld, welches die Messung optisch verstärkt und als mikroskopisch genaue Zeitreferenz fungiert. Das Lokaloszillatorfeld wird in einem Strahlteiler aufgeteilt, was es erlaubt im Detektor D1 die störungsfreie Signalamplitude auszulesen und in dem Detektor D2 die störungsfreie Signalphase auszulesen. Trotz destruktiver Interferenz bleibt immer eine minimale Reststörung. Ist die Reststörung größer als ein vorbestimmter Wert für die Reststörung, so ist dies ein Maß, wie groß der abgehörte Anteil des Lichtes ist. Aufbauend darauf, können entsprechende Maßnahmen zur Behebung der Sicherheitslücke eingeleitet werden

Der Vorteil der Erfindung kommt besonders zum Tragen, wenn die korrelierten Störsignale auf den Lichtfeldern L1 und L2 in Form von verschränkten Quantenzuständen vorliegen. Verschränkte Quantenzustände der Lichtfelder L1 und L2 liegen vor, wenn gequetschtes Laserlicht mit einem Strahlteiler auf die zwei Strahlen L1 und L2 aufgeteilt wird. Werden bei der dezentralen Messung Phasenänderungen gemessen, so liegt Verschränkung hinsichtlich der Amplituden und Phasenquadraturmodulation der Lichtfelder aus L1 und L2 vor. In dieser Ausführungsvariante wird das zurückkommende Licht mit dem verschränkten Licht in der Messstation an einem Strahlteiler überlagert und die beiden Ausgänge benutzt, um eine Amplitudenmodulation mit gequetschter Quantenunschärfe auszulesen und zum anderen eine Phasenquadraturmodulation mit gequetschter Quantenunschärfe auszulesen. Der Quetschfaktor in Relation zur Signalstärke gibt an, wieviel Information in der Summe maximal abgeflossen ist. Ist die abgeflossene Information über die dezentrale Messung zu hoch, kann als Reaktion das Aussenden des Lichts gestoppt werden.

Figur 2 entspricht dem Aufbau in Figur 1 mit dem Unterschied, dass der lichtführende Wellenleiter F1 über einen Faraday-Rotator R nach außen zu dem Messpunkt M5 geführt wird. In dem Messpunkt M5 oder an einem entfernt liegenden Punkt kann ein Reflektor vorgesehen sein, der den im Wellenleiter F1 geführten Lichtstrahl zurückwirft, so dass er über den Faraday-Rotator R zu dem Strahlteiler S1 in der Interferometereinheit geführt wird. Der Reflektor kann auch als ein druckempfindlicher oder temperaturempfindlicher oder feuchtigkeitsempfindlicher Sensor ausgebildet sein, der die optische Weglänge abhängig von diesen Messgrößen bei selektierten Frequenzen variiert.

## Patentansprüche

1. Vorrichtung zum faser-optischen Messen und Transportieren von Messsignalen, mit einer Messstation, die eine oder mehrere Laserquellen und mindestens zwei Wellenleiter (F1, F2) aufweist, die dazu eingerichtet sind, mindestens einen Messstrahl und einen Referenz-Lichtstrahl in jeweils einem Wellenleiter zu führen, wobei der den Referenz-Lichtstrahl führende Wellenleiter (F2) innerhalb der Messstation verläuft und die mindestens zwei Lichtstrahlen an einer Interferometereinheit zusammengeführt sind, die mindestens einen Photodetektor (D1, D2) aufweist, wobei der den Messstrahl führende Wellenleiter (F1) als ein Ring ausgebildet ist, bei dem beide Enden in der Messstation angeordnet sind und der Messstrahl aus der Messstation kommend den Wellenleiter durchläuft und wieder in die Messstation eintritt und/oder der den Messstrahl führende Wellenleiter (F1) mit einem Ende in der Messstation entspringt und an seinem freien Ende einen Reflektor aufweist, **dadurch gekennzeichnet, dass** ein Dauerstrich-Laserlicht in den Messstrahl und den Referenzstrahl aufgeteilt ist, wobei das Dauerstrich-Laserlicht in Leistung, Phase und/oder Frequenz zufällig oder quasi-zufällig moduliert ist.

2. Vorrichtung nach Anspruch 1, **dadurch gekennzeichnet, dass** für das Dauerstrich-Laserlicht verschränktes Laserlicht vorgesehen ist.

3. Vorrichtung nach einem der Ansprüche 1 bis 2, **dadurch gekennzeichnet, dass** ein zufälliges Störsignal (N) dem Mess- und dem Referenz-Laserstrahl (L1, L2) derart aufgeprägt wird, dass das Störsignal (N) in der Interferometereinheit mit dem Referenz-Laserstrahl aus den Messdaten entfernt wird.

4. Vorrichtung nach Anspruch 3, **dadurch gekennzeichnet, dass** das Störsignal mindestens die Hälfte, bevorzugt mehr als 80% eines Signalfrequenzbandes bedeckt.

5. Vorrichtung nach Anspruch 3 oder 4, **dadurch gekennzeichnet, dass** ein Quantenzufallsgenerator zur Erzeugung des zufälligen Störsignals vorgesehen ist.

6. Vorrichtung nach Anspruch 3 bis 5, **dadurch gekennzeichnet, dass** die in der Interferometereinheit überlagerten Mess- und Referenzstrahlen Strahlen mit gequetschten Quantenunschärfen liefern.

7. Vorrichtung nach Anspruch 6, **dadurch gekennzeichnet, dass** der Quetschfaktor mindestens zwei (entspricht 3dB) beträgt.

8. Vorrichtung nach einem der Ansprüche 1 bis 7, **dadurch gekennzeichnet, dass** die Interferometereinheit dazu ausgebildet ist, mit einem ersten Detektor eine störungsfreie Signalamplitude und mit einem zweiten Detektor eine störungsfreie Signalphase auszulesen.

9. Vorrichtung nach einem der Ansprüche 1 bis 7, **dadurch gekennzeichnet, dass** die Interferometereinheit von einem Lokaloszillator zum Auswerten der überlagerten Mess- und Referenzstrahlen gespeist wird.

10. Vorrichtung nach einem der Ansprüche 1 bis 9, **dadurch gekennzeichnet, dass** in dem Wellenleiter des Messstrahls ein oder mehrere Sensoren vorgesehen sind, die einen Messwert auf den Messstrahl aufmodulieren.

11. Vorrichtung nach Anspruch 10, **dadurch gekennzeichnet, dass** der Sensor zur Erfassung einer lokalen Temperatur oder einer lokalen Luftfeuchte oder eines Kamerabildes ausgebildet ist.

12. Vorrichtung nach einem der Ansprüche 1 bis 11, **dadurch gekennzeichnet, dass** die Interferometereinheit zwei Photodetektoren (D1, D2) aufweist.

## Claims

1. Device for fibre-optical measurement and transport of measurement signals, comprising a measuring station which has one or more laser sources and at least two waveguides (F1, F2), which are configured to guide at least one measurement beam and one reference light beam in a respective waveguide, wherein the waveguide (F2) guiding the reference light beam runs within the measuring station and the at least two light beams are brought together at an interferometer unit which has at least one photodetector (D1, D2), wherein the waveguide (F1) guiding the measurement beam is formed as a ring in which both ends are arranged in the measuring station and the measurement beam, coming from the measuring station, passes through the waveguide and re-enters the measuring station and/or the waveguide (F1) guiding the measurement beam originates with one end in the measuring station and has a reflector at its free end, **characterized in that** a continuous-wave laser light is split into the measurement beam and the reference beam, wherein the continuous-wave laser light is randomly or quasi-randomly modulated in power, phase and/or frequency.

2. Device according to claim 1, **characterized in that** entangled laser light is provided for the continuous-wave laser light.

3. Device according to one of claims 1 to 2, **characterized in that** a random interference signal (N) is superimposed on the measurement and reference laser beams (L1, L2) in such a way that the interference signal (N) is removed from the measurement data in the interferometer unit with the reference laser beam.

4. Device according to claim 3, **characterized in that** the interference signal covers at least half, preferably more than 80%, of a signal frequency band.

5. Device according to claim 3 or 4, **characterized in that** a quantum random generator is provided for generating the random interference signal.

6. Device according to claims 3 to 5, **characterized in that** the measurement and reference beams superimposed in the interferometer unit provide beams with squeezed quantum uncertainties.

7. Device according to claim 6, **characterized in that** the squeezing factor is at least two (corresponds to 3dB).

8. Device according to one of claims 1 to 7, **characterized in that** the interferometer unit is configured to read out an interference-free signal amplitude with a first detector and an interference-free signal phase with a second detector.

9. Device according to one of claims 1 to 7, **characterized in that** the interferometer unit is fed by a local oscillator for evaluating the superimposed measurement and reference beams.

10. Device according to one of claims 1 to 9, **characterized in that** one or more sensors are provided in the waveguide of the measurement beam, which modulate a measurement value onto the measurement beam.

11. Device according to claim 10, **characterized in that** the sensor is configured to detect a local temperature or a local air humidity or a camera image.

12. Device according to one of claims 1 to 11, **characterized in that** the interferometer unit has two photodetectors (D1, D2).

## Revendications

1. Dispositif de mesure par fibre optique et de transport de signaux de mesure, comprenant une station de mesure, laquelle présente une ou plusieurs sources laser et au moins deux guides d'onde (F1, F2), lesquels sont configurés pour guider au moins un faisceau de mesure et un faisceau lumineux de référence respectivement dans un guide d'onde, dans lequel le guide d'onde (F2) guidant le faisceau lumineux de référence s'étend à l'intérieur de la station de mesure et les au moins deux faisceaux lumineux sont réunis au niveau d'une unité interférométrique présentant au moins un photodétecteur (D1, D2), dans lequel le guide d'onde (F1) guidant le faisceau de mesure est conçu comme un anneau dont les deux extrémités sont disposées dans la station de mesure, et le faisceau de mesure traverse le guide d'onde en sortant de la station de mesure et entre de nouveau dans la station de mesure, et/ou le guide d'onde (F1) guidant le faisceau de mesure émane de la station de mesure à une extrémité et présente un réflecteur à son extrémité libre, **caractérisé en ce qu'**une lumière laser à onde continue est divisée entre le faisceau de mesure et le faisceau de référence, dans lequel la lumière laser à onde continue est modulée de façon aléatoire ou quasi-aléatoire en puissance, en phase et/ou en fréquence.

2. Dispositif selon la revendication 1, **caractérisé en ce qu'**en tant que lumière laser à onde continue, il est prévu une lumière laser intriquée.

3. Dispositif selon l'une des revendications 1 à 2, **caractérisé en ce qu'**un signal de perturbation aléatoire (N) est appliqué de telle façon au faisceau de mesure et au faisceau laser de référence (L1, L2) que le signal de perturbation (N) est éliminé des données de mesure dans l'unité interférométrique à l'aide du faisceau laser de référence.

4. Dispositif selon la revendication 3, **caractérisé en ce que** le signal de perturbation couvre au moins la moitié, de préférence plus de 80 % d'une bande de fréquences de signal.

5. Dispositif selon la revendication 3 ou 4, **caractérisé en ce qu'**il est prévu un générateur de nombres aléatoires quantique destiné à produire le signal de perturbation aléatoire.

6. Dispositif selon les revendications 3 à 5, **caractérisé en ce que** les faisceaux de mesure et de référence superposés dans l'unité interférométrique fournissent des faisceaux avec des incertitudes quantiques comprimées.

7. Dispositif selon la revendication 6, **caractérisé en ce que** le facteur de compression est d'au moins deux (correspondant à 3 dB).

8. Dispositif selon l'une des revendications 1 à 7, **caractérisé en ce que** l'unité interférométrique est conçue pour lire une amplitude de signal sans interférence à l'aide d'un premier détecteur et une phase de signal sans interférence à l'aide d'un deuxième détecteur.

9. Dispositif selon l'une des revendications 1 à 7, **caractérisé en ce que** l'unité interférométrique est alimentée par un oscillateur local pour l'évaluation des faisceaux de mesure et de référence superposés.

10. Dispositif selon l'une des revendications 1 à 9, **caractérisé en ce que** dans le guide d'onde du faisceau de mesure, il est prévu un ou plusieurs capteurs modulant une valeur de mesure sur le faisceau de mesure.

11. Dispositif selon la revendication 10, **caractérisé en ce que** le capteur est conçu pour déterminer une température locale ou une humidité ambiante locale ou une image de caméra.

12. Dispositif selon l'une des revendications 1 à 11, **caractérisé en ce que** l'unité interférométrique présente deux photodétecteurs (D1, D2).
